# EUROPEAN PATENT SPECIFICATION

(11) **EP 3 121 800 B1**
(45) Date of publication and mention of the grant of the patent: **08.01.2020**
(21) Application number: 16179300.5
(22) Date of filing: 13.07.2016
(51) Int. Cl.: F16M 11/08, H04N 5/225, G08B 15/00, F16M 13/02, F16M 11/20, G03B 17/02, G03B 17/56, G08B 13/196

(54) **CAMERA BASE DEVICE WITH SCREW-IN PLUG**
KAMERASOCKELVORRICHTUNG MIT EINSCHRAUBBAREM STECKER
DISPOSITIF À BASE DE CAMÉRA AVEC UN BOUCHON À VISSER

(30) Priority: 17.07.2015 TW 104123157
(43) Date of publication of application: 25.01.2017
(73) Proprietor: Amaryllo International B.V., Hsinchu County 302 (TW)
(72) Inventor: YANG, Chao-Tung, 302 Hsinchu County (TW)
(74) Representative: Schmid, Nils T.F.

(56) References cited:
- TW-U- M 498 431
- US-A1- 2007 041 727
- US-A1- 2013 050 495

## Description

This application claims priority benefit of Taiwan Patent Application Ser. No. 104123157 filed 2015/7/1.

### BACKGROUND OF THE INVENTION

### 1. Field of the invention

The present application consists of two parts forming a single device. It describes a camera base device, particularly a camera base device which is equipped with a screw-in plug and adjusted in size according to a lampshade structure.

### 2. Description of the prior art

To strengthen control over the environment, a user installs monitoring devices at important areas for recording and surveillance of all conditions. Moreover, technicians have to complete extra wirings which supply an operating voltage to all monitoring devices but increase costs.

To address the above issue, the prior arts (Taiwan Patents: M498431, "Bulb type monitoring camera", and M496304 "Monitoring camera and monitoring camera system"; U.S. Patents: US6812970, "Video camera utilizing power line modulation", and US20130169814, "Lamp socket type camera") further describe a camera device with a screw-in plug. With the screw-in plug inserted into a light socket, the operating voltage can be supplied to the camera device through the plug. However, most monitor manufacturers cannot offer a monitoring device that matches various types of lampshades in actual installation environment. For a lampshade greater than a monitoring device in size, clear video data may not be transmitted from the monitoring device because the lampshade obstructs the viewing angle of the monitoring device.

As described previously, monitoring devices based on the prior arts are not adjusted in size for various types of lampshades and reduce acceptability of consumers for a camera device with a screw-in plug. Therefore, how to provide a camera base device with its size adjusted according to a lampshade structure is a technical issue to be addressed by the persons skilled in the art.

### SUMMARY OF THE INVENTION

To overcome the above problem, the present application offers a camera base device with a screw-in plug which is adjusted in size according to the installation environment.

To achieve the aforementioned objective, the present application provides a camera base device with a screw-in plug. The camera base device comprises a retractable body and a screw-in plug wherein the retractable body comprising a plurality of serially connected retracting segments has two ends, which are defined as a plug-in end and a connecting end, respectively: the plug-in end links the screw-in plug; the connecting end combines an external camera device through a connector.

As mentioned previously, the camera base device, which depends on the retracting segments for adjustment of the retractable body in length, matches various sizes of lampshades without the abovementioned installation problem.

### BRIEF DESCRIPTION OF THE DRAWINGS

For a better understanding of the aforementioned embodiments of the invention as well as additional embodiments thereof, reference should be made to the Description of Embodiments below in conjunction with the following drawings in which like reference numerals refer to the corresponding parts throughout the figures.
FIG. 1 is a structural schematic view of a camera base device with a screw-in plug 1 in an embodiment.
FIG. 2 is a structural schematic view of a cross section of a camera base device.
FIG. 3 illustrates a motor device in a camera base device in embodiment.
FIG. 4 illustrates a motor device in a camera base device in another embodiment.
FIG. 5 is a schematic view of a camera base device in another embodiment.
FIG. 6 is a schematic view of a camera base device in another embodiment.
FIG. 7 is a schematic view of a camera base device in another embodiment.
FIG. 8 is a system block diagram of a camera base device in another embodiment.
FIG. 9 is a schematic view of a camera base device in another embodiment.
FIG. 10 is a structural schematic view of a cross section of a cover body.
FIG. 11 is a schematic view which illustrates a camera base device with a screw-in plug installed in one situation.
FIG. 12 is a schematic view which illustrates a camera base device with a screw-in plug installed in another situation.

### DETAILED DESCRIPTION OF THE PREFERRED EMBODIMENT

The following description is about embodiments of the present invention; however it is not intended to limit the scope of the present invention.

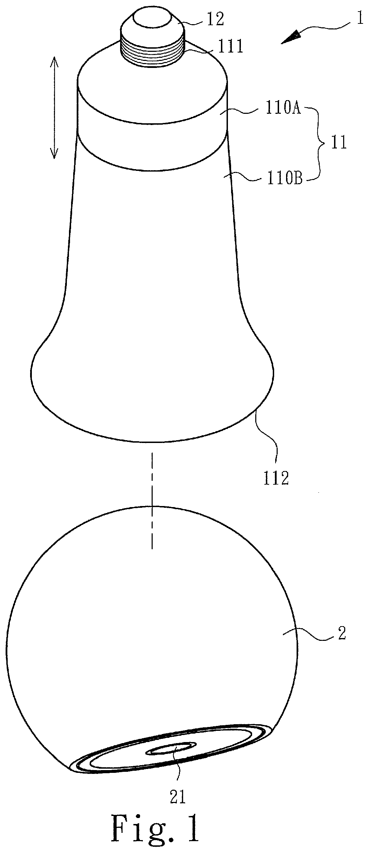

Referring to FIG. 1, which illustrates a camera base device 1 with a screw-in plug in one embodiment. The camera base device 1 comprises a retractable body 11 and a screw-in plug 12. The retractable body 11 comprises a plurality of serially connected retracting segments 110 (a first retracting segment 110A and a second retracting segment 110B). The retractable body 11 has one end defined as a plug-in end 111 and the other end defined as a connecting end 112. The connecting end 112 is configured to combine an external camera device with a connector. The screw-in plug 12 is a screwed plug conforming to standards of Edison screws (ES).

The camera device (camera device 2) comprises a controlling circuit module (for example, digital circuit, micro-controller chip circuit, etc.), a camera module (with a lens 21 and a driver circuit), non-transitory memories and a communications circuit. The controlling circuit module links the camera module, the non-transitory memories and the communications circuit. The controlling circuit module is used to store images taken by the lens 21 in internal non-transitory memories or transmit images taken by the lens 21 to a server through the communications circuit for storage. The non-transitory memories might be a memory device such as flash memories or a hard disk. The communications circuit might be a wireline communications circuit (for example, network interface communications circuit, coaxial-cable interface communications circuit, fiber interface communications circuit, etc.) or a wireless communications circuit (Bluetooth, Wi-Fi, 3G/4G/5G communications circuit, etc.). The aforementioned camera base 2 and the camera device 1 can be illustrated/ paired in two separated units, or it can be designed as a single device.

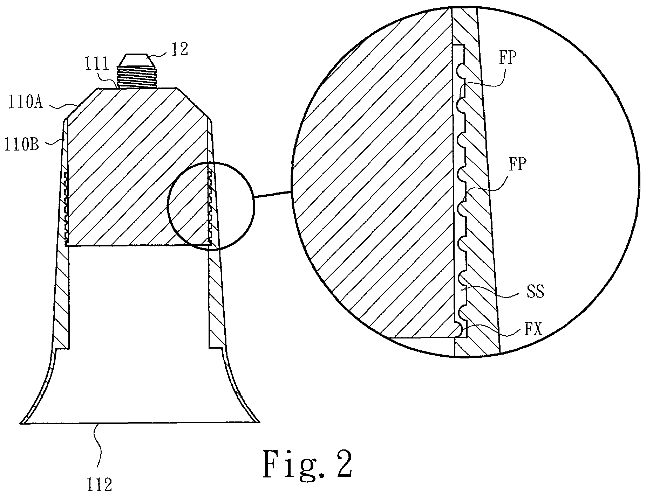

Referring to FIG. 2, which is a sectional view of the camera base device 1. The first retracting segment 110A has one portion defined as a fixed end (FX). The fixed end (FX) is held and moved in slide slots (SS) inside the second retracting segment 110B for adjustment of the retractable body 11 in length. In the slide slots (SS) the retracting segment 110B is provided with at least one fixed portion (FP) (for example, bump structure, cavity structure, latch, spring, gear, etc.) by which the fixed end (FX) of the first retracting segment 110A is fixed in a fixed portion (FP) or between two fixed portions (FP) for setup of the retractable body 11 in length while moved in the fixed portion (FP) or between the two fixed portions (FP). The retractable body 11 broadens in width gradually from the plug-in end 111 to the connecting end 112. The retractable body 11 has a cross section with a curve structure and structurally matches the inside structure of a lampshade 5, for example, the size of the retractable body 11 is less than the inside structure of the lampshade 5.

For the connecting end 112 with a plurality of open pores (not shown in the figure) in another embodiment, the camera device 2 also has other open pores (not shown in the figure) corresponding to the open pores on the connecting end 112. As connectors, a group of screws and nuts (not shown in the figure) are used to latch the perforate connecting end 112 and the perforate camera device 2 for combination of the camera base device 1 and the camera device 2.

For a latch (not shown in the figure) taken as a connector in another embodiment, the camera device 2 is provided with a corresponding latch structure (not shown in the figure) by which the camera base device 1 and the camera device 2 are connected to each other.

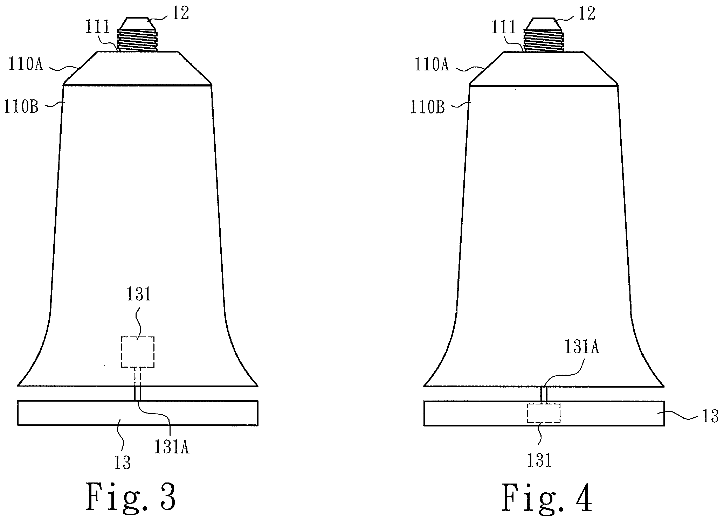

Referring to FIGS. 3 and 4, which illustrate the camera base device 1 further comprising a rotatable platform 13 linking the retracting segments 110 for rotation of the rotatable platform 13 relative to the retractable body 11 in a rotating mode in another embodiment. As shown in the embodiment in FIG. 3, the retractable body 11 is internally equipped with a motor device 131 which is fixed inside the retractable body 11 and has a rotating shaft with a terminal 131A fixed on the rotatable platform 13. As shown in the embodiment in FIG. 4, the rotatable platform 13 is internally equipped with the motor device 131 which is fixed inside the rotatable platform 13 and has a rotating shaft with a terminal 131A fixed on the retractable body 11. In the two embodiments, the motor device 131, which has been driven to rotate, enables the rotatable platform 13 to make rotations relative to the retractable body 11.

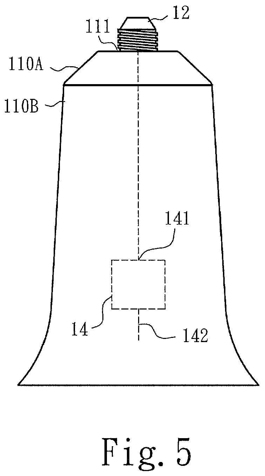

Referring to FIG. 5, which illustrates the retractable body 11 which is internally equipped with an AC-DC converting circuit 14 in another embodiment. In the AC-DC converting circuit 14, an AC input end 141 is connected to the screw-in plug 12. In the AC-DC converting circuit 14 which is electrically activated, a DC output end 142 provides post-stage circuits with a DC operating voltage.

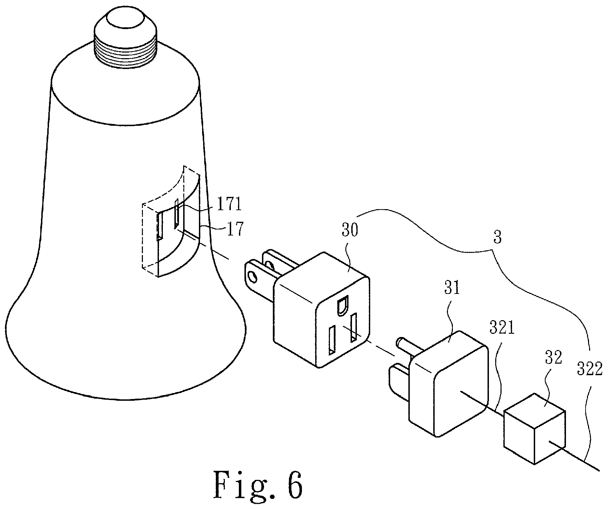

Referring to FIG. 6, which illustrates the retractable body 11 comprising a groove 17 recessed from the surface of the retractable body 11 inward for holding a plug structure in another embodiment. Inside of the groove 17 opened sockets 171 are provided which are electrically connected to the screw-in plug 12. In the present embodiment, the AC-DC converting circuit 14 is a removable AC-DC converting circuit module 3 which comprises a plug adapter 30 (an adapter for Type A plug coupling Type B plug), an AC plug 31 (Type B plug) and an AC-DC converting circuit module 32, which are cascaded with one another. In the AC-DC converting circuit module 32, an AC end 321 is connected to the AC plug 31 which is further plugged into the groove 17 and the sockets 171 therein via the plug adapter 30. A DC end 322 in the AC-DC converting circuit module 32, which is electrically activated, provides post-stage circuits with a DC operating voltage.

For the removable AC-DC converting circuit module 3 in which no plug adapter 30 is installed in another embodiment, the sockets 171 match the AC plug 31 in specifications (for example, both the sockets 171 and the AC plug 31 are classified into but not limited to Type A or Type B).

In the present application, half-wave rectifier circuits, full-wave rectifier circuits or switch-mode rectifier circuits are available to both the AC-DC converting circuit 14 and the AC-DC converting circuit module 32.

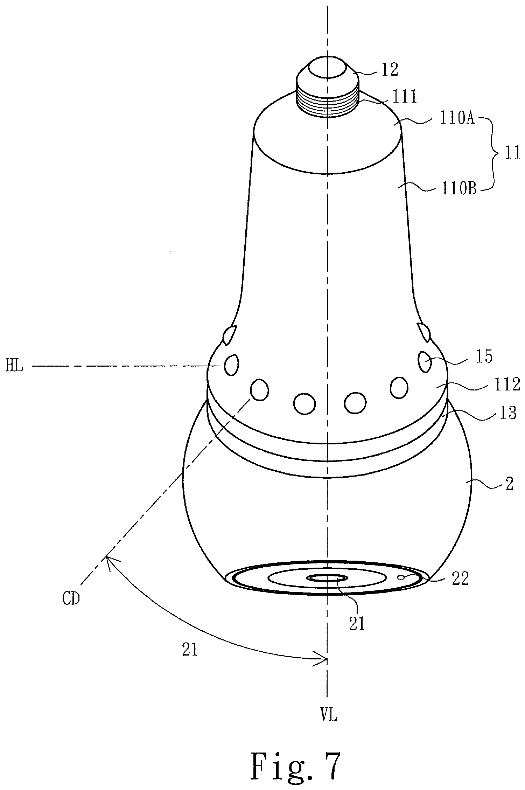

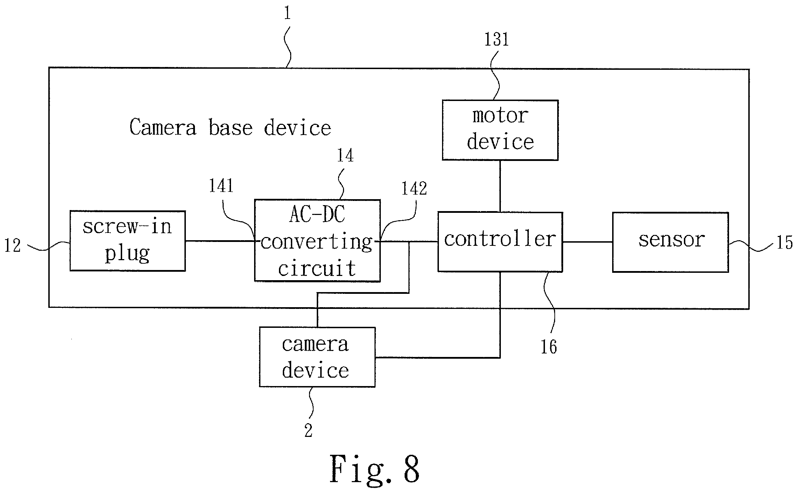

Referring to FIG. 7, which illustrates the camera base device 1 further comprising a plurality of sensors 15 and a controller 16 in another embodiment (FIG. 8). The sensors 15 are embedded in some positions adjacent to the connecting end 112. Referring to FIG. 8, a system block diagram for the camera base device 1 is illustrated, wherein an AC terminal on the screw-in plug 12 is connected to the AC input end 141 of the AC-DC converting circuit 14 and the DC output end 142 of the AC-DC converting circuit 14 is connected to power supply terminals of both the controller 16 and the camera device 2. Input/output pins on the controller 16 are electrically connected to the sensors 15 and the rotatable platform 13. Power supply pins on the sensors 15 are connected to the DC output end 142 of the AC-DC converting circuit 14 for supplying an operating voltage.

In another embodiment, the AC-DC converting circuit module 32 in the removable AC-DC converting circuit module 3 replaces the AC-DC converting circuit 14. In the screw-in plug 12, an AC terminal is electrically connected to the AC end 321 of the AC-DC converting circuit module 32 and the DC end 322 of the AC-DC converting circuit module 32 is connected to power supply terminals of both the controller 16 and the camera device 2.

The sensors 15 which are circumferentially installed on the retractable body 11 establish a specific monitoring scope according to positions of the sensors 15. The controller 16 analyzing a sensing result from the sensors 15 is able to detect any target 7 coming within the monitoring scope and a direction of the target 7, enabling the rotatable platform 13 according to the sensing result from the sensors 15, and aiming the lens 21 of the camera device 2 at the target 7 for shooting.

The controlling circuit module in the camera device 2 is further connected to the controller 16 and enables the camera module to shoot an external target according to a sensing result from the controller 16; the controlling circuit module, which received a plurality of images from the camera module and analyzed pixel distribution of the images, decides any target coming within a monitoring scope and further enables the camera device 2 to track the target after analyzing pixel variations among the images for movement of the target. Moreover, referring to FIG. 7 again, which illustrates the camera device 2 further comprising a laser transmitter 22 connected with the controlling circuit module. The controlling circuit module further enables the laser transmitter 22 to emit a laser beam toward a target for warning effect.

The sensors 15 are chosen from but not limited to temperature sensors, infrared sensors, ultrasonic sensors, radar sensors, etc. The controller 16 is an electronic component with computational capability such as Application Specific Integrated Circuit (ASIC) chip, microprocessor, etc. In another embodiment, each of the sensors 15 recessed in the retractable body 11 is installed according to a configuring direction (CD) which forms an included angle with the vertical line (VL) of the retractable body 11. The camera base device 1 is configured to establish a monitoring scope with the included angle being adjusted. In detail, the configuring direction (CD) is defined between the horizontal line (HL) and the vertical line (VL).

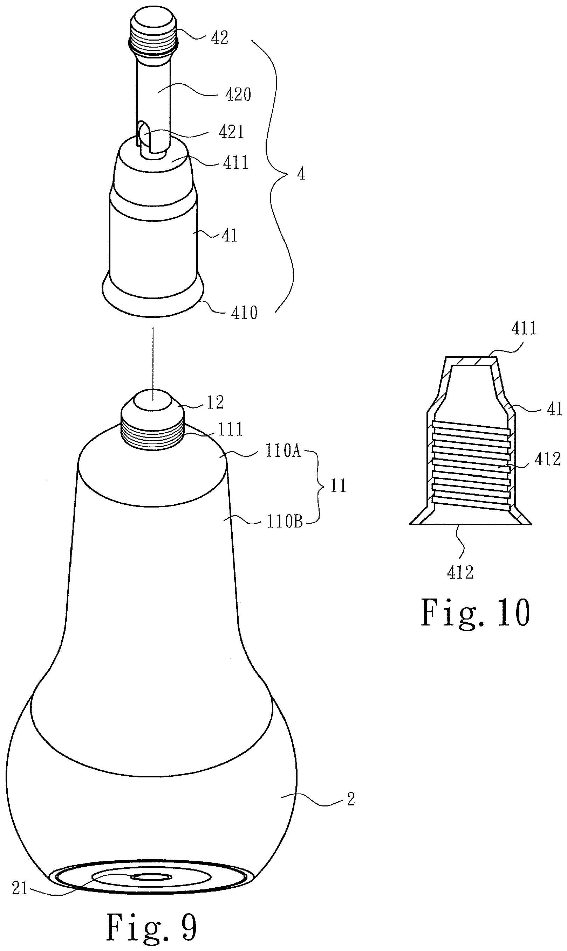

Referring to FIG. 9, which illustrates the camera base device 1 further comprising an extending connector 4 in another embodiment. The extending connector 4 comprises a cover body 41 and an extending screw-in plug 42. Referring to FIG. 10, a sectional view of the cover body 41, which illustrates the cover body 41 from a cover opening 410 internally, develops a screw-in socket 412 toward a cover cap 411 and the screw-in socket 412 structurally matches the screw-in plug 12. The extending screw-in plug 42 is electrically connected to the screw-in socket 412 that has an extended connecting portion 420 linking the cover body 41 for adjustment of the extending screw-in plug 42 relative to the cover body 41. The extended connecting portion 420 is a hollow component in which a wire linking the extending screw-in plug 42 and the screw-in socket 412 is installed.

In another embodiment, the extended connecting portion 420 has an extended connecting end 421 which is a pivot component (for example, shaft pivot, sphere pivot, etc.) used to link the cover body 41. In a further embodiment, the extended connecting portion 420 is a bendable component (for example, tube, serpentine coil, gooseneck, etc.).

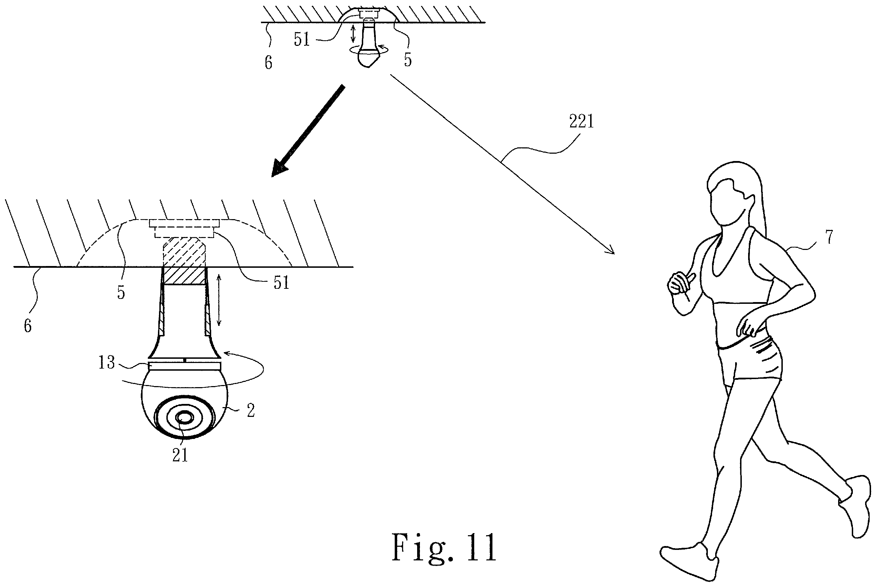

Referring to FIG. 11, which is a schematic view illustrating a camera base device with a screw-in plug being installed in one situation. As shown in FIG. 11, the lampshade 5 and a light socket 51 are mounted on a ceiling 6. With the screw-in plug 12 of the camera base device 1 being inserted into the light socket 51, the retractable body 11, which is adjusted in length by a user, matches the size of every lampshade 5. The controller 16 analyzing a sensing result from the sensors 15 detects any target 7 coming within a monitoring scope and a direction of the target 7, regulates operation of the rotatable platform 13, and aims the lens 21 of the camera device 2 at the target 7 for dynamic tracing and shooting. In addition, the camera device further drives the laser transmitter 22 (FIG. 7) to emit the laser beam 221 toward the target 7 in a whole course and gives the target 7 a hint of not entering a specific area.

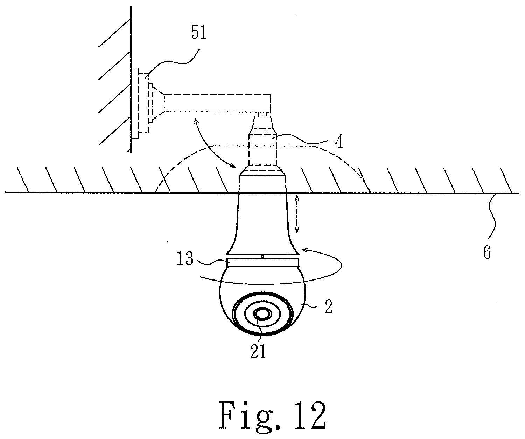

Referring to FIG. 12, which is a schematic view illustrating a camera base device with a screw-in plug being installed in another situation. In some cases when the light socket 51 is not situated above the lampshade 5 (for example, the light socket 51 is next to both sides of the opening of the lampshade 5), the camera base device 1 matches the extending connector 4 to flexibly adjust a position of the camera base device 1.

The above application is related to the detailed technical contents and inventive features thereof. People skilled in this field may proceed with a variety of modifications and replacements based on the applications and suggestions of the invention as described without departing from the characteristics thereof. Nevertheless, although such modifications and replacements are not fully disclosed in the above descriptions, they have substantially been covered in the following claims as appended.

## Claims

1. A camera base device (1) comprising a a screw-in plug (12) and a retractable body (11), said retractable body (11) having a plug-in-end (111) and comprising a plurality of serially connected retracting segments (110), wherein one end of the retractable body (11) is the plug-in-end (111) and the other end of the retractable body (11) is a connecting end (112), wherein the connecting end (112) is configured to combine an external camera device (2) with a connector, and the plug-in-end (111) is connected with the screw-in plug (12).

2. The camera base device (1) as claimed in claim 1, wherein a width of the retractable body (11) gradually widens along a direction from the plug-in-end (111) to the connecting end (112).

3. The camera base device (1) as claimed in claim 1, wherein a cross section of the retractable body (11) comprises a curve structure.

4. The camera base device (1) as claimed in claim 2, wherein a size of the retractable body (11) is less than an inside size of a lampshade.

5. The camera base device (1) as claimed in claim 1, wherein the connector comprises a latch structure for combining the camera device.

6. The camera base device (1) as claimed in claim 1, wherein the connecting end (112) further comprises a rotatable platform which is connected to the retractable body (11), wherein the rotatable platform further rotates relative to the retractable body (11) in a rotating mode.

7. The camera base device (1) as claimed in claim 6, further comprising:
a plurality of sensors, embedded in the retractable body (11) and neighbored to a position of the connecting end (112); and
a controller, electrically connected to the sensors and the rotatable platform device,
wherein the controller further enables the rotatable platform to rotate according to a sensing result of the sensors.

8. The camera base device (1) as claimed in claim 7, wherein the sensors are recessed in the retractable body (11) and a configuring direction of the sensor forms an angle with a vertical axis of the retractable body (11).

9. The camera base device (1) as claimed in claim 7, further comprising a camera device connected to the connecting end (112) by the connector, wherein the camera device further comprises:
a camera module;
a laser transmitter; and
a controlling circuit module, connected with the camera module, the laser transmitter and the controller, the controlling circuit module further enables the camera module according to the sensing result of the controller to acquire a plurality of images from the camera module, and tracks an external target by comparing pixel distribution of the images, the controlling circuit module further enables the laser transmitter for emitting a laser beam to the target.

10. The camera base device (1) as claimed in claim 1, further comprising an AC-DC converting circuit, wherein an AC input end of the AC-DC converting circuit electrically connects to the screw-in plug.

11. The camera base device (1) as claimed in claim 1, wherein the retractable body (11) recesses a groove space from a surface of the retractable body (11) to an inner space of the retractable body (11), the groove space has sufficient space to accommodate a plug structure, the groove further comprises a socket electrically connected with the screw-in plug.

12. The camera base device (1) as claimed in claim 11, further comprising a removable AC-DC converting circuit module, wherein an AC plug of the removable AC-DC converting circuit module is configured to plug in the socket and the groove space.

13. The camera base device (1) as claimed in claim 1, further comprising an extending connector, wherein the extending connector further comprises:
a cover body, forming a screw-in socket along a direction from an opening end of the cover body to a top end of the cover body; and
an extending screw-in plug, electrically connected with the screw-in socket, wherein a connecting portion of the extending screw-in plug (12) connects the cover body so as to adjust position relative to the cover body.

14. The camera base device (1) as claimed in claim 13, wherein one end of the extending connector pivotally connects with the cover body.

15. The camera base device (1) as claimed in claim 13, wherein the extending connector is a bendable component.

## Patentansprüche

1. Kamerabasisgerät (1) umfassend:
- einen Einschraubstecker (12) und
- einen einziehbaren Körper (11), der ein Einsteckende (111) besitzt und eine Vielzahl von seriell verbundenen Einzugselementen (110) umfasst, wobei ein Ende des einziehbaren Körpers (11) das Einsteckende (111) ist und das andere Ende des einziehbaren Körpers (11) ein Verbindungsende (112) ist, wobei das Verbindungsende (112) dazu ausgelegt ist, ein externes Kameragerät (2) mit einem Verbinder zu kombinieren, und das Einsteckende (111) ist mit dem Einschraubstecker (12) verbunden.

2. Kamerabasisgerät (1) nach Anspruch 1, wobei sich eine Breite des einziehbaren Körpers (11) sukzessive entlang einer Richtung vom Einsteckende (111) zum Verbindungsende (112) weitet.

3. Kamerabasisgerät (1) nach Anspruch 1, wobei ein Querschnitt des einziehbaren Körpers (11) eine Kurvenstruktur umfasst.

4. Kamerabasisgerät (1) nach Anspruch 2, wobei eine Größe des einziehbaren Körpers (11) kleiner als eine Innengröße eines Lampenschirms ist.

5. Kamerabasisgerät (1) nach Anspruch 1, wobei der Verbinder eine Arretierungsstruktur zum Verbinden des Kamerageräts umfasst.

6. Kamerabasisgerät (1) nach Anspruch 1, wobei das Verbindungsende (112) weiterhin umfasst eine drehbare Plattform, die mit dem einziehbaren Körper (11) verbunden ist, wobei die drehbare Plattform in einem Drehmodus relativ zum einziehbaren Körper (11) weiter dreht.

7. Kamerabasisgerät (1) nach Anspruch 6, weiterhin umfassend:
- eine Vielzahl von Sensoren, die in den einziehbaren Körper (11) eingebettet und zu eine Position des Verbindungsende (112) benachbart sind; und
- eine Steuerung, die elektronisch mit den Sensoren und dem rotierbaren Plattformgerät verbunden ist,
wobei die Steuerung die rotierbare Plattform weiterhin befähigt, sich entsprechend eines sensorischen Ergebnisses des Sensors zu drehen.

8. Kamerabasisgerät (1) nach Anspruch 7, wobei die Sensoren in dem einziehbaren Körper (11) zurückgesetzt sind und eine konfigurierende Richtung des Sensors einen Winkel mit einer vertikalen Achse des einziehbaren Körpers (11) ausbildet.

9. Kamerabasisgerät (1) nach Anspruch 7, weiterhin umfassend ein mit dem Verbindungsende (112) durch einen Verbinder verbundenes Kameragerät, wobei des Kameragerät weiterhin umfasst:
- ein Kameramodul;
- einen Lasertransmitter; und
- ein Steuerkreismodul, das mit dem Kameramodul, dem Lasertransmitter und der Steuerung verbunden ist, das Steuerkreismodul das Kameramodul weiterhin befähigt, entsprechend eines sensorischen Ergebnisses der Steuerung eine Vielzahl von Bildern vom Kameramodul zu erfassen, und ein externes Ziel durch den Vergleich der Pixelverteilung der Bilder nachverfolgt, das Steuerkreismodul weiterhin den Lasertransmitter zum Aussenden eines Laserstrahls zum Ziel befähigt.

10. Kamerabasisgerät (1) nach Anspruch 1, weiterhin umfassend einen AC-DC-Wandelkreis, wobei ein AC-Eingangsende eines AC-DC-Wandelkreis sich elektronisch mit dem Einschraubende verbindet.

11. Kamerabasisgerät (1) nach Anspruch 1, wobei der einziehbare Körper (11) sich von einer Oberfläche des einziehbaren Körpers (11) zu einem inneren Raum des zurückziehbaren Körpers (11), in einen Vertiefungsraum zurücksetzt, der Vertiefungsraum ausreichend Raum zum Unterbringen einer Steckerstruktur hat, der Vertiefungsraum weiterhin eine Aufnahme umfasst, die elektronisch mit dem Einschraubstecker verbunden ist.

12. Kamerabasisgerät (1) nach Anspruch 11, weiterhin umfassend einen entfernbaren AC-DC-Wandelkreis, wobei ein AC-Stecker des entfernbaren AC-DC-Wandelkreises dazu ausgelegt ist, in die Aufnahme und in den Vertiefungsraum einzustecken.

13. Kamerabasisgerät (1) nach Anspruch 1, weiterhin umfassend einen verlängernden Verbinder, wobei der verlängernde Verbinder weiterhin umfasst:
- einen Abdeckkörper, der eine Einschraub-Aufnahme entlang einer Richtung von einem Öffnungsende des Abdeckkörpers zu einem oberen Ende des Abdeckkörpers ausbildet; und
- einen verlängernden Einschraubstecker, der elektronisch mit einem Einschraubanschluss verbunden ist, wobei ein verbindender Anteil des verbindenden Einschraubansteckers (12) mit dem Abdeckkörper verbindet, um die Position relativ zum Abdeckkörper einzustellen.

14. Kamerabasisgerät (1) nach Anspruch 13, wobei ein Ende des verlängernden Verbinders schwenkend mit dem Abdeckkörper verbindet.

15. Kamerabasisgerät (1) nach Anspruch 13, wobei der verlängernde Verbinder eine biegbare Komponente ist.

## Revendications

1. Dispositif de base de caméra (1) comprenant une prise de vissage (12) et un corps rétractable (11), ledit corps rétractable (11) ayant une extrémité de branchement (111) et comprenant une pluralité de segments en rétraction connectés en série (110), une extrémité du corps rétractable (11) étant l'extrémité de branchement (111) et l'autre extrémité du corps rétractable (11) étant une extrémité de connexion (112), l'extrémité de connexion (112) étant conçue pour combiner un dispositif de caméra externe (2) à un connecteur, et l'extrémité de branchement (111) étant connectée à la prise de vissage (12).

2. Dispositif de base de caméra (1) selon la revendication 1, dans lequel une largeur du corps rétractable (11) s'élargit graduellement dans un sens depuis l'extrémité de branchement (111) jusqu'à l'extrémité de connexion (112).

3. Dispositif de base de caméra (1) selon la revendication 1, dans lequel une section transversale du corps rétractable (11) comprend une structure à courbe.

4. Dispositif de base de caméra (1) selon la revendication 2, dans lequel une taille du corps rétractable (11) est inférieure à une taille intérieure d'un abat-jour.

5. Dispositif de base de caméra (1) selon la revendication 1, dans lequel le connecteur comprend une structure à verrou pour combiner le dispositif de caméra.

6. Dispositif de base de caméra (1) selon la revendication 1, dans lequel l'extrémité de connexion (112) comprend en outre une plate-forme rotative qui est connectée au corps rétractable (11), la plate-forme rotative tournant en outre par rapport au corps rétractable (11) en mode rotatif.

7. Dispositif de base de caméra (1) selon la revendication 6, comprenant en outre :
une pluralité de capteurs encastrés dans le corps rétractable (11) et adjacents à une position de l'extrémité de connexion (112) ; et
une commande connectée électriquement aux capteurs et au dispositif à plate-forme rotative,
la commande permettant en outre à la plate-forme rotative de tourner en fonction d'un résultat de détection des capteurs.

8. Dispositif de base de caméra (1) selon la revendication 7, dans lequel les capteurs sont en retrait dans le corps rétractable (11) et un sens de configuration du capteur forme un angle avec un axe vertical du corps rétractable (11).

9. Dispositif de base de caméra (1) selon la revendication 7, comprenant en outre un dispositif de caméra connecté à l'extrémité de connexion (112) par le connecteur, le dispositif de caméras comprenant en outre :
un module de caméra ;
un transmetteur de laser ; et
un module de circuit de commande connecté au module de caméra, au transmetteur de laser et à la commande, le module de de commande permettant en outre au module de caméra, en fonction du résultat de détection de la commande, d'acquérir une pluralité d'images provenant du module de caméra, et suivant une cible externe en comparant la répartition de pixels des images, le module de circuit de commande permettant en outre au transmetteur de laser d'émettre un faisceau laser vers la cible.

10. Dispositif de base de caméra (1) selon la revendication 1, comprenant en outre un circuit de conversion AC-DC, une extrémité d'entrée du circuit de conversion AC-DC se connectant électriquement à la prise de vissage.

11. Dispositif de base de caméra (1) selon la revendication 1, dans lequel le corps rétractable (11) met en retrait un espace de rainure du corps rétractable (11) vers un espace intérieur du corps rétractable (11), l'espace de rainure ayant suffisamment de place pour loger une structure de prise, la rainure comprenant en outre une douille connectée électriquement à la prise de vissage.

12. Dispositif de base de caméra (1) selon la revendication 11, comprenant en outre un module de circuit de conversion AC-DC amovible, une prise AC du module de circuit de conversion AC-DC amovible étant conçue pour se brancher dans la douille et l'espace de rainure.

13. Dispositif de base de caméra (1) selon la revendication 1, comprenant en outre un connecteur en extension, le connecteur en extension comprenant en outre :
un corps de recouvrement formant une douille de vissage dans un sens allant d'une extrémité d'ouverture du corps de recouvrement à une extrémité supérieure du corps de recouvrement ;
une prise de vissage en extension connectée électriquement à la douille de vissage, une section de connexion de la prise de vissage en extension (12) connectant le corps de recouvrement de manière à ajuster sa position par rapport au corps de recouvrement.

14. Dispositif de base de caméra (1) selon la revendication 13, dans lequel une extrémité du connecteur en extension se connecte de manière pivotable au corps de recouvrement.

15. Dispositif de base de caméra (1) selon la revendication 13, dans lequel le connecteur en extension est un composant pliable.
